(19) Europäisches Patentamt

European Patent Office

Office européen des brevets

(11) EP 2 405 568 B1

## (12) EUROPEAN PATENT SPECIFICATION

(45) Date of publication and mention of the grant of the patent:
**14.08.2013 Bulletin 2013/33**

(21) Application number: **10425226.7**

(22) Date of filing: **05.07.2010**

(51) Int Cl.:
*H02P 3/18* *(2006.01)*          *H02P 27/08* *(2006.01)*

(54) **Electronic power apparatus for controlling the movement of alternating current (AC) electric motors stopping such motors in a safe way**

Elektronische Energievorrichtung zur Steuerung der Bewegung von Wechselstrom-Elektromotoren, die auf sichere Weise angehalten werden

Appareil électronique pour contrôler le mouvement de moteurs électriques à courant alternatif (CA) arrêtant ces moteurs de manière sécurisée

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.01.2012 Bulletin 2012/02**

(73) Proprietor: **Gefran S.p.A.**
**25050 Provaglio d'Iseo (Brescia) (IT)**

(72) Inventors:
• **Fontanili, Massimo**
**20148 Milano (IT)**

• **Molteni, Roberto**
**21049 Tradate (IT)**

(74) Representative: **Leihkauf, Steffen Falk et al**
**Jacobacci & Partners S.p.A.**
**Via Senato 8**
**20121 Milano (IT)**

(56) References cited:
EP-A1- 1 857 229          EP-A2- 1 542 330
EP-A2- 1 724 915          EP-A2- 2 086 103
WO-A1-2008/132975          US-A1- 2004 164 694
US-A1- 2010 309 589

**Description**

Field of application

The present invention refers to the field of electronic apparatuses suitable for delivering electrical power to control the movement of alternating current (AC) electric motors. In particular, the invention refers to an inverter comprising a circuit block able to be controlled to interrupt the supply of power to the electric motor stopping it in a safe way.

Prior art

In the field of electronic power apparatuses used in the industrial sector, like in particular inverters or drives, which deliver power to move an alternating current (AC) electric motor, for example three-phase, it is necessary to ensure adequate functional safety of the motor, i.e. to be able to control with certainty some functions of the motor, like for example starting up or stopping, as required.

In many cases, the correct performance of a function is important to ensure the safety of an entire system and of the people that work with it: if a worker needs machinery actuated by the aforementioned three-phase motor to be stopped in order to allow the intervention of a maintenance professional, the stopping of the machinery (the required function), i.e. the stopping of the motor, must take place with a high level of safety to avoid risks to people. The level of safety with which the function is carried out depends substantially upon the number of hardware/software faults that the system can withstand (fault tolerance).

In the field of inverters that deliver power to move three-phase motors, a safe stopping function of the motor is generally indicated "Safe Torque Off" (STO) by men skilled in the art.

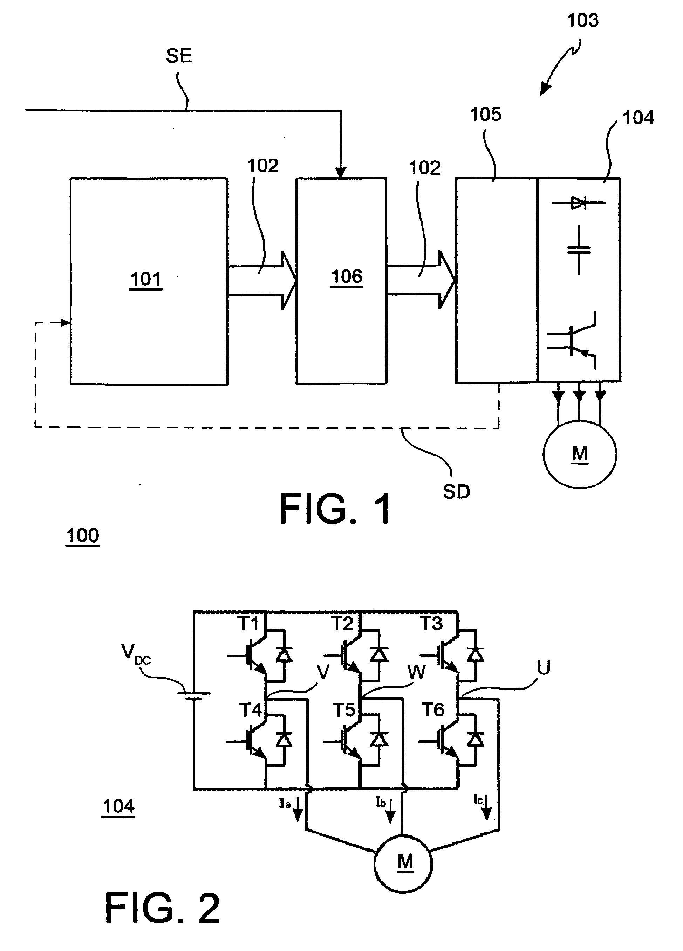

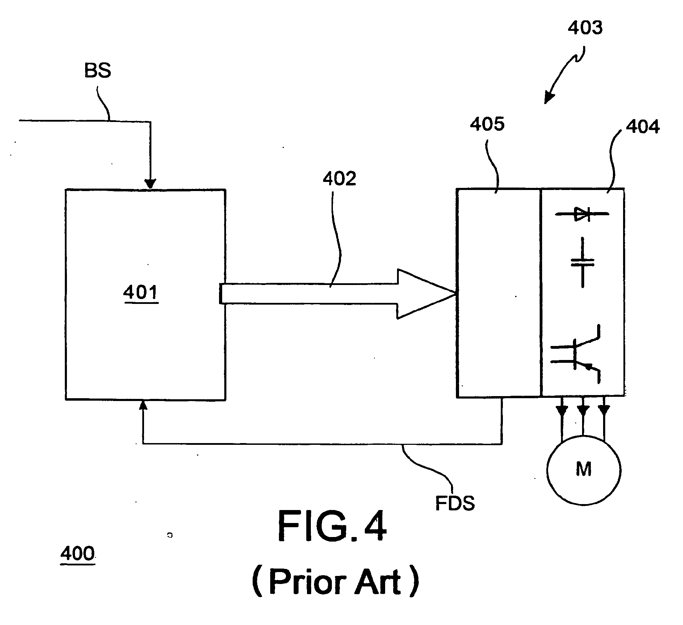

An inverter for industrial uses 400 of the known type is shown as an example in figure 4 through a block diagram. In particular, such an inverter 400 comprises an adjustment stage 401 suitable for generating Pulse Width Modulation PWM signals 402, to control the switching on/off of power transistors included in a power stage 403. Such a power stage 403 comprises a power block 404 and a control block 405 (power driver). A circuit diagram of the power block 404 of the inverter 400 is shown as an example in figure 2 and it is known to the person skilled in the art. The control block 405 includes opto-coupler devices suitable for controlling the gate terminals of the transistors of the power block 404.

The adjustment stage 401 comprises, in particular, a microprocessor suitable for receiving feedback digital signals FDS generated by the control block 405 and representative of operating parameters of the motor M. Based on such feedback signals FDS, the microprocessor is suitable for generating a suitable sequence of PWM signals 402 for controlling the transistors of the power stage 403 that ensures the desired speed (or driving torque) for the three-phase motor M.

In order to implement the safety function STO in the inverter 400, i.e. to safely stop the motor M avoiding undesired movements, a known solution foresees to prevent the generation of PWM signals 402 by the adjustment stage 401. For this purpose it is foreseen to send a blocking signal BS to the microprocessor of the adjustment stage 401 to prevent the aforementioned PWM signals 402. However, such a solution does not allow the occurrence of some possible faults or malfunctions to be avoided, like for example:

- the blocking signal BS not reaching the microprocessor correctly;
- the software stored in a memory of the microprocessor not interrupting the generation of the PWM signals 402 due to programme defects;
- the microprocessor having a hardware problem and not being able to switch off the PWM modulators.

One or more faults of this type can cause the STO function to fail, i.e. the failure of the motor M to stop when required during normal operation or in an emergency.

Other known solutions adopted to implement the STO function in an inverter 400 analogous to the one shown in figure 4 foresee blocking the propagation of the PWM signals 402 on an input or on an output of the opto-couplers included in the control block 405.

In particular, one of such solutions foresees that the input PWM signals 402 into each opto-coupler be prevented through the use of at least two pass-transistors arranged in parallel and configured to be positioned in series with each PWM signal. However, such a solution has the disadvantage that the pass transistors arranged in series with the signal can degrade or modify the signal that passes through them particularly if such a signal is of the digital type like in the case of PWM. Moreover, the occurrence of a fault on a single pass-transistor can compromise the safety of the entire device.

An alternative solution foresees to interrupt the power supply voltage of the output stage of the opto-coupler included in the control block 405. However, the fact that the opto-couplers are not supplied with power, although on the one hand it makes it impossible to switch on the gates of the power transistors of the power block 404 blocking the propagation of the PWM signals 402, nevertheless has the disadvantage of disabling the opto-couplers that otherwise perform an active function even when the PWM signals are low. In particular, such a function carried out by the opto-couplers consists of keeping the gate terminal of the corresponding power transistors IGBT low, making it not very sensitive to possible disturbances.

Document EP 1542330 A2 describes a drive circuit for delivering high level power to a load a method of stopping a high power load from operating.

Document US 2004/164694 A1 described a drive controller for a self-commutated converter having two half-bridges with converter valves.

The purpose of the present invention is to devise and provide an electronic apparatus, like for example an inverter or drive, which delivers power to control the movement of alternating current (AC) electric motors, comprising a circuit block to interrupt the delivery of such power to the motor stopping it in a safe way having characteristics that allow the limitations and/or drawbacks of known solutions to be overcome.

Such a purpose is accomplished through an electronic apparatus in accordance with claim 1. Preferred embodiment of such an apparatus are defined in the dependent claims 2-12.

Brief description of the drawings

Further characteristics and advantages of the aforementioned electronic apparatus or inverter will become clear from the following description of a preferred embodiment, given for indicating and not limiting purposes, with reference to the attached figures, in which:

- **figure 1** shows a block diagram of an inverter that delivers power to an alternating current motor comprising a block suitable for safely interrupting the delivery of power in accordance with the invention;
- **figure 2** shows a circuit diagram of a power block of the known type of the inverter of figure 1;
- **figure 3** shows a circuit diagram of an embodiment of the interruption block included in the inverter of figure 1;
- **figure 4** shows a block diagram of a known inverter used in the industrial sector to control the movement of an alternating current motor.

Detailed description

With reference to the aforementioned figure 1, reference numeral 100 indicates a block diagram of an electronic apparatus used in the industrial sector to deliver power to control the movement of a motor M in accordance with the invention as a whole.

It should be observed that such an electronic apparatus 100 is defined as an inverter or drive by men skilled in the art and the motor M is preferably an alternating current (AC) electric motor. For example, such a motor is of the three-phase type.

In particular, the inverter 100 comprises an adjustment stage 101 suitable for generating a plurality of pulse width modulation PWM digital signals wholly indicated with reference numeral 102. Preferably, there are six of such PWM signals and they are suitable for controlling the switching on/off of as many power transistors included in a power stage 103 of the inverter 100. Such a power stage 103 comprises, in particular, a power block 104 and a control block 105 (power driver).

A circuit diagram of the power block 104 of the inverter 100 is shown as an example in figure 2. The power transistors T1-T6, for example IGBT transistors (Insulated Gate Bipolar Transistor), are connected together to form a three-phase bridge, the outputs or phases of which V, W, U deliver voltage and current to the motor M. The aforementioned three-phase bridge is polarized by a direct voltage source $V_{DC}$.

The control block 105 includes, for example, opto-coupler devices (not shown in figure 1) suitable for controlling the gate terminals of the power transistors T1-T6 of the power block 104 based on the PWM signals 102. Such opto-coupler devices are of the type known by a person skilled in the art.

During the operation of the inverter 100, the adjustment stage 101 is suitable for receiving feedback digital signals SD generated by the control block 105 representative of operating parameters of the motor M. For example, such feedback signals indicate the intensity of currents Ia, Ib, Ic delivered by the power block 103 to the motor M (shown in figure 2), the position of the rotor of the same motor M with respect to a reference position, etc. In greater detail, the adjustment stage 101 comprises a microprocessor suitable for receiving and analysing such feedback signals SD to generate a suitable sequence of PWM signals 102 for controlling the transistors T1-T6 that ensures that the desired speed (or driving torque) is obtained for the three-phase motor M. The PWM signals 102 operate to switch on and switch off the transistors T1-T6 of the power block 104 at a frequency within the range 4-16kHz.

Advantageously, the inverter 100 comprises a circuit block or safety circuit 106 arranged between the adjustment stage 101 and the power stage 103 to receive the PWM signals 102.

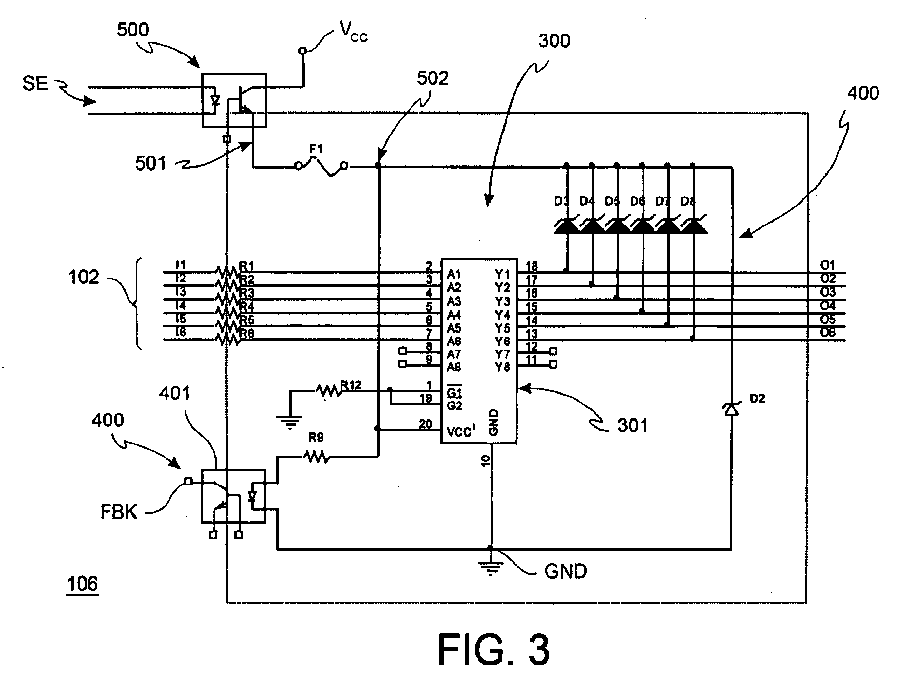

A preferred embodiment of the safety circuit 106 of the invention can be described in reference to figure 3.

Such a circuit 106 comprises a safety portion 300 and a feedback portion 400. The safety portion 300 is suitable for safely interrupting the passage of the PWM digital signals 102 generated by the adjustment stage 101. The feedback portion 400 is suitable for sending an alarm feedback signal FBK to outside of the safety circuit 106 to inform possible external control systems of the defectiveness of the circuit 106 itself and in this way prevent harmful consequences caused by the occurrence of many faults accumulated over time.

In greater detail, the safety portion 300 of the safety circuit 106 comprises a buffer device or digital buffer 301 manufactured in CMOS technology. For example, the buffer 301 is implemented with the component type 74VHC541 of Fairchild Semiconductor.

Advantageously, such a digital buffer 301 is suitable for taking up an active/inactive state in response to a digital control signal SE applied to the safety circuit 106. It should be observed that by the term active state we mean that the buffer 301 is connected to an electrical polarization terminal Vcc of the safety circuit 106, i.e. the buffer 301 is connected to a power supply voltage, for example of 5V. On the other hand, by the term inactive state of the buffer 301 we mean that the buffer 301 is disconnected from the aforementioned power supply voltage Vcc.

In particular, the buffer 301 is configured to allow such PWM digital signals 102 to transit from the adjustment stage 101 to the power stage 103 in said active state and to prevent such signals 102 from transiting in said inactive state.

It should be observed that the aforementioned digital control signal SE is like a Safety Enable signal suitable for taking up a high level (1 logic) to activate the buffer 301 and a low level (0 logic) to deactivate it.

In greater detail, the safety circuit 106 comprises a first opto-coupler device 500 suitable for being activated/deactivated by the safety enable signal SE to allow/prevent the transfer of energy from the electrical polarization terminal Vcc to a first common polarization terminal 502 of the circuit 106 to which both the buffer 301 and the aforementioned feedback portion 400 are connected. A fuse F1 is connected between an output terminal 501 of the first opto-coupler 500 and the common polarization terminal 502 to interrupt such an energy transfer in the case of short-circuits.

It should be noted that the digital buffer 301 is an integrated device comprising a power supply pin VCC' connected to the first polarization terminal 502 and a ground pin GND connected to a ground reference potential GND.

In reference to figure 3, the buffer 301 comprises a first plurality of input terminals connected to respective input pins to each receive a PWM digital signal 102 generated by the adjustment stage 101. For example, the buffer 301 comprises six input terminals connected to six input pins A1-A6. In reference to figure 3, such digital input signals 102 are wholly indicated with the input signals I1-I6. It should be noted that such input signals Ii (with I=1, ...,6) are voltage signals of comparable level to the power supply voltage Vcc of 5V. Moreover, each input terminal of the buffer 301 is connected to the respective input pin Ai (with i=1, ...,6) through an input resistance Ri (with i=1, ...,6) suitable for limiting the current on the respective input Ai of the buffer 301. It should be noted that each input terminal of the buffer 301 can be connected to the respective input pin Ai through two or more resistances Ri connected together in series.

The buffer 301 comprises a second plurality of output pins, in particular six output pins Y1-Y6 to supply six digital output signals O1-O6 to the control block 105 of the power stage 103. Each output signal O1 O6 represents a current and voltage signal on the input of the control stage 105.

It should be observed that the buffer 301 operates to block/allow the PWM digital input signals I1-I6 to pass according to the operating state. In the case in which the buffer 301 allows such PWM signals to pass, the circuits included in the control block 105 are activated when the current (and voltage) levels of the output signals O1-O6 of the buffer 301 are greater than respective minimum values IOmin (VOmin).

Moreover, the buffer 301 can be without protective diodes integrated on the inputs A1-A6, or else the protections only intervene at voltages over the power supply voltage Vcc.

Advantageously, the input resistances R1-R6 of the circuit block 106 of the invention are all sized based on the following relationship:

$$Ri > 6((VccMax-VOmin)/IOmin) \qquad\qquad (1)$$

where VccMax represents the maximum power supply voltage of the circuit block 106, VOmin and IOmin are the minimum voltage and current reference values to switch on the control circuits in the block 105.

Moreover, the power that can be dissipated by each input resistance Ri is greater than $(VccMax)^2/Ri$ (with i=1, ..., 6) .

The feedback portion 400 of the circuit block 106 also comprises six Zener diodes D3, D4, D5, D6, D7 and D8 suitable for connecting the output pins Y1-Y6 of the buffer 301 to the power supply potential Vcc. In particular, each diode D3-D8 has the anode connected to a respective output pin Y1-Y6 of the buffer 301 and the cathode connected to the first polarization terminal 502.

Moreover, the feedback portion 400 comprises a second opto-coupler device 401 having respective input terminals connected to the first polarization terminal 502 through a first resistance R9 and to the ground reference potential GND. The first resistance has a value of about 220 Ohm. Such a second opto-coupler 401 is suitable for providing the aforementioned feedback signal FBK on a respective output terminal.

Moreover, the circuit block 106 comprises a further Zener diode D2 that operates as a protective element against overvoltages. In particular, such a diode D2 has the anode connected to the ground reference potential GND and the cathode connected to the first polarization terminal 502. Advantageously, such a diode D2 has a Zener voltage Vz of over 5v and a power that can be dissipated of over 6*(Vz*VccMax)/R1 (corresponding to the worst situation in which the maximum current flows from the inputs and it all flows onto the diode).

In reference to figure 3, the pins 61 and 62 normally have the purpose of enabling/disabling the buffer 301 through an internal logic function. In the circuit block 106 of the invention, however, such a buffer 301 is activated/deactivated through the first opto-coupler 500 and the two pins 61, 62 are kept at the ground reference potential GND through the further resistance R12 in order to keep the internal logic always in active state (ON).

Hereafter we will describe an example of operation of the circuit block 106 of the invention included in the inverter 100 to allow the motor M to stop safely.

With the digital safety enable signal SE at high level (1 logic), the block 106 operates to allow the input signals I1-I6 to pass. In particular, the enable signal SE switches on the first opto-coupler 500, which supplies the digital buffer 301 with power. The resistances R1...R6 present on the input terminals of the buffer 301 are, therefore, each electrically connected in series with a CMOS gate terminal having high impedance. The value of each resistance R1-R6 is negligible with respect to the high impedance of a CMOS gate, and therefore the level of the PWM digital signals I1-I6 present on the input terminals is not modified by such resistances R1-R6. In other words, the PWM signals I1-I6 generated by the adjustment stage 101 are unaltered on the input pins A1...A6 of the buffer 301.

Since the buffer 301 operates to allow the PWM signals to pass, such signals I1-I6 are present substantially unaltered on the outputs of the buffer Y1-Y6.

In the case in which the digital safety enable signal SE is of low level (0 logic), the circuit block 106 is in safety mode to prevent the PWM digital signals I1-I6 from transiting preventing them from being able to reach the control block 105 of the inverter 100.

In particular, with low SE signal, the first opto-coupler 500 stops supplying power to the block 106 through the first polarization terminal 502. The buffer 301 does not receive power on the power supply pin VCC' and nor can it receive any through the input pins A1-A6 that, as known, being CMOS gates, do not absorb current. Basically, the buffer 301 does not have input current flows from any pin A1-A6. Consequently, there is no current on the output pins Y1-Y6, i.e. the output signals O1...O6 are not generated.

Advantageously, the resistances R1...R6 intervene in the case in which the buffer 301 should have a malfunction. In such a condition, indeed, by suitably sizing the value of the resistances R1...R6 based on the relationship (1), it is also ensured that also in the case in which the input currents to the buffer 301 should flow completely on one of the outputs Y1-Y6, the resulting current would not be sufficient to activate an opto-coupler of the control block 105.

In such a condition, advantageously, the circuit block 106 remains intrinsically safe.

In addition to the previous safety function, the Zener diodes D3...D8 make it possible to detect and indicate to the outside the malfunction conditions that may occur in the presence of many faults of the circuit 106. In greater detail, again with low level safety enable signal SE, when the second opto-coupler 401 is switched off, the potential of the first polarization terminal 502 is close to 0. If, due to many faults, on one of the outputs Yi of the buffer 301 there is an output signal Oi of sufficient level to switch on an opto-coupler of the control block 105, such an output signal Oi would also be able to raise the potential of the first polarization terminal 502 through the respective Zener diode. In this way, the second opto-coupler 401 would be switched on to indicate the malfunction condition through the feedback signal FBK.

It should be observed that, in order to simplify the analysis of the faults that can affect the circuit block 106, it is presumed that the first 500 and the second 401 opto-coupler, the further Zener diode D2 and the resistances R12 and R9 have no faults. Therefore, the consequences of a single fault that can affect the remaining components of the circuit 106 will be analysed.

If a fault affects one of the resistances R1-R6, such resistances, as known, can take up one of the three states: short-circuit, open circuit, or they undergo a variation of the nominal value.

In the case in which one of the resistances Ri is a short-circuit, the respective PWM digital input signal Ii reaches the buffer 301 unaltered. However, the high impedance condition of the relative input Ai prevents such an input signal Ii from transiting towards the respective output Yi of the buffer 301 preventing the generation of the output signal Oi.

If one of the resistances Ri is an open circuit, the PWM input signal Ii cannot pass. In this case, the safety of the circuit 106 is ensured, but with the safety enable signal SE active, the circuit 106 will no longer operate.

In the case in which one of the resistances Ri is affected by a variation of the nominal value, since in the limit conditions, i.e. short circuit and open circuit, safety is still ensured, the same occurs for an intermediate resistance value.

The circuit block 106 is, therefore, insensitive to a fault that affects one of the resistances Ri.

In the case of a fault that affects the buffer 301, it is presumed that, in the worst case, such a fault respects the principle of conservation of current, i.e. all of the input currents (in the presence of a fault presuming that currents can flow on the inputs A1-A6) add together on an output Yi of the buffer 301 without producing voltage drops. This is equivalent to assuming the presence of a short-circuit of all the inputs A1-A6 of the buffer 301 on a single output Yi. In such a condition, presuming that the voltage present on such an output Yi approaches the activation value of the power block 103, i.e. VOi=VOmin, the relative output current is less than or equal to IOi=6(Vcc-VOmin)/Ri.

However, due to how the resistances Ri have been sized (with i= 1...6) based on the relationship (1), follows IOi<IOmin, and therefore the devices of the power block 103 cannot be activated.

The circuit block is, therefore, also insensitive to a fault that affects the buffer 301.

In the case in which the fault affects one of the Zener diodes Di (with i=3...8), such a fault can manifest itself in one of the following ways: the diode Di becomes a short-circuit, the diode Di becomes an open circuit, the diode Di changes its activation voltage. It should be noted that the aforementioned three faults of a diode Di cannot affect the output signals O1-O6 of the buffer 301 since, in the presence of the safety enable signal SE, the potential on the first polarization terminal 502 is zero. Therefore, a fault on a Zener diode Di (with i=3...8) does not contribute in any way to raising the output signals O1-O6 of the buffer 301.

In the case in which the fault affects one of the input voltage signals Ii of the buffer 301, i.e. such an input voltage is greater than the polarization voltage Vcc, it is presumed that the maximum voltage value that can affect the circuit 106 is VccMax and that this value cannot be exceeded.

In such a condition, it is presumed that due to the overvoltage the buffer 301 can break connecting the input pins A1-A6 with the output pins Y1-Y6 in the worst way possible, i.e. the voltages I1-I6 on the inputs can generate output currents concentrated on a single output Yi. In such a condition, the current on the single output Yi of the buffer 301 is given by the relationship:

$$IOi<6(VccMax-VOmin)/Ri \quad (with \; i= 1...6) \qquad (2)$$

Assuming that the resistances R1-R6 have been sized based on the relationship (1), the safety of the circuit 106 is ensured since IOi<IOmin.

It should be noted that in normal operating conditions of the circuit block 106, the occurrence of a fault on the buffer 301 is nevertheless not very likely after an input overvoltage: indeed, beyond a certain voltage level on the inputs A1-A6 the protective diodes inside the buffer 301 itself would be activated. Such protective diodes connect the inputs A1-A6 with the power supply potential Vcc. In this way the buffer 301 continues to operate correctly to prevent the input signals I1-I6 from transiting on the outputs Y1-Y6.

Moreover, it should be noted that the power supply voltage Vcc cannot in any case go beyond the voltage Vz at which the further Zener diode D2 is activated.

Advantageously, the safety circuit 106 is configured to ensure that the three-phase motor M stops when the control signal SE is at low level even in the case in which faults can affect the same circuit 106.

Based on the previous considerations it is derived that the circuit block 106 of the invention included in the inverter 100 ensures a safety or fault tolerance level equal to or greater than 1 upon a stop command of the motor M.

Hereafter we shall examine conditions that can involve the presence of 2 simultaneous faults in the circuit block 106 in the absence of the safety enable signal SE. In particular, such faults fall within one of the following 8 categories:

a) fault of 2 resistances Ri;

b) fault of one of the resistances Ri and of the buffer 301;

c) fault of a resistance Ri and of a PWM input signal Ii;

d) fault of a resistance Ri and of a Zener diode Di;

e) fault of the buffer 301 and of a PWM input signal Ii;

f) fault of the buffer 301 and of a diode Di;

g) fault of a PWM signal Ii and of a diode Di;

h) fault of two diodes Di.

The following table TAB1 summarises the 8 categories of faults listed above, for each of which indicating the functional consequences and the state of the feedback signal FBK present on the output of the second opto-coupler 401.

**TAB1**

| Fault category | Functional consequences | FBK signal state |
|---|---|---|
| a) | If the buffer 301 works, the faults on the resistances Ri cannot cause the loss of safety. | Faults not indicated |
| b) | If a resistance Ri suffers a fault transforming into short-circuit and the buffer 301 is faulty a path of the input-output currents can be determined that can potentially switch on the devices of the power block 104. | If an output Oi goes high due to faults, the potential of the terminal 502 is raised through one of the diodes Di and the FBK signal is confirmed. **Faults indicated** |
| c) | If the buffer 301 works, it will itself block the propagation of signals, irrespective of the state of the resistances Ri. The safety condition is ensured. | **Faults could be indicated in the case in which the** resistance Ri transforms into short-circuit and the high input voltage determines a raising of the potential of 502 through the diodes Di. |
| d) | If the buffer 301 works, it will itself block the propagation of signals, irrespective of the state of the resistances and of the diodes. The safety condition is therefore not lost. | Faults are not indicated |
| e) | The integrity of the resistances in any case determines the limitation of the output currents even in out-of-control input voltage conditions (still less than VccMax) | **Faults could be indicated in the case in which the** input voltage Ii is high and the fault on the buffer 301 determines a raising of the potential of 502. |
| f) | The integrity of the resistances Ri in any case determines the limitation of the output currents. | **Faults could be indicated in the case in which the** fault on the buffer 301 determines a raising of 502. |
| g) | The integrity of the resistances in any case determines the limitation of the output currents, even in out-of-control input voltage conditions (still less than VccMax). In this case one of the outputs could theoretically pass from the inputs to the line Vcc through a diode in short-circuit conditions. In any case the maximum current would be IOi=6(VccMax-Vz)/Ri i.e. less than IOmin. | **Faults could be indicated in the case in which the** high input voltage and the fault of the diode determine a raising of Vcc. |
| h) | The resistances and the buffer remain safe. | Faults are not indicated |

Based on the table TAB1, it is concluded that the only condition of loss of the safety condition is b) (simultaneous fault of a resistance Ri of the buffer 301). In such a condition, however, the circuit block 106 in any case indicates the malfunction through the activation of the feedback signal FBK.

Advantageously, lacking the enable signal SE, thanks to the presence of the buffer 301, the circuit block 106 prevents the digital signals I1-I6 from reaching the power stage 103 of the inverter 100, stopping the motor M safely. Moreover, the input resistances R1-R6, suitably sized based on (1), perform a fundamental role to ensure the safety of the circuit block so long as they are intact.

The resistances R1-R6, as well as being a cost-effective circuit component, are such that a suitable sizing or redundancy thereof allows the reliability of the circuit block 106 to be increased.

The Applicant has found that the inverter 100 comprising the circuit block 106 of the invention, has the following overall advantages:

- cost-effectiveness;
- compact structure;
- absence of degradation of the digital input signals Ii;

- increase in the safety level through redundancy of the resistances Ri.

A person skilled in the art can bring modifications, adaptations and replacements of elements with other functionally equivalent ones to the embodiment of the solution for an inverter described above, in order to satisfy contingent requirements, without departing from the scope of the following claims.

**Claims**

1. Electronic power apparatus (100) for controlling the movement of a three-phase alternating current (AC) electric motor (M), comprising:

   - an adjustment stage (101) suitable for generating a plurality of pulse width modulated PWM digital signals (102);
   - a power stage (103) suitable for transferring electrical power to the motor (M) to control its movement based on said digital signals;
   - a circuit block (106) arranged between said adjustment stage (101) and said power stage (103) to receive said PWM digital signals (102) at input pins (A1-A6),

   said circuit block (106) comprising an electronic buffer device (301) suitable for taking up an active/inactive state in response to a control signal (SE) applied to the circuit block (106), in said active/inactive state the buffer device (301) is connected/disconnected to/from, an electrical polarization terminal (Vcc) of the circuit block (106), the buffer device (301) comprising a first plurality of input terminals each connected to a respective input pin (A1-A6) to each receive one of said PWM digital signals (102) generated by the adjustment stage (101), and being configured to allow said digital signals (102) to transit from the adjustment stage (101) to the power stage (103) in said active state and to prevent the signals (102) from transiting in said inactive state,
   **characterized in that** said buffer device (301) is of the CMOS type and each input terminal is connected to the respective input pin (A1-A6) through at least one input resistance (Ri) configured for limiting an electric current on said pin during said inactive state, said input resistances (R1-R6) of the circuit block are all sized based on the following relationship:

$$Ri > 6((VccMax-VOmin)/IOmin)$$

   where VccMax is the maximum power supply voltage of the circuit block (106), and VOmin and IOmin are the minimum voltage and current reference values for switching on the control circuits included in the power stage (103).

2. Electronic power apparatus (100) according to claim 1, wherein said first plurality of input terminals comprises six terminals.

3. Electronic power apparatus (100) according to claim 1, wherein said at least one input resistance (Ri) is suitable for dissipating a power greater than:

$$(VccMax)^2/Ri,$$

   where VccMax is the maximum power supply voltage of the circuit block (106) and Ri is the value of said at least one input resistance.

4. Electronic power apparatus (100) according to claim 1, wherein said circuit block (106) comprises a first opto-coupler device (500) suitable for being activated/deactivated by said control signal (SE) to allow the connection of a power supply pin (VCC') of the buffer device (301) to said electrical polarization terminal (Vcc) in the active state of the buffer device and to prevent it in the inactive state of the device.

5. Electronic power apparatus (100) according to claim 4, wherein said first opto-coupler device (500) is activated/deactivated to connect/disconnect the electrical polarization terminal (Vcc) to a first common polarization terminal. (502) of the circuit block (106), said power supply pin (VCC') of the buffer device (301) being connected to said first common terminal (502).

6. Electronic power apparatus (100) according to claim 5, wherein said circuit block (106) comprises Zener diodes (D3,D4,D5,D6,D7,D8) suitable for connecting a second plurality of output pins (Y1-Y6) of the buffer device (301) to said first common polarization terminal (502).

7. Electronic power apparatus (100) according to claim 6, wherein said second plurality of output pins (Y1-Y6) of the buffer device (301) comprises six output pins.

8. Electronic power apparatus (100) according to claim 5, wherein said circuit block (106) comprises a second opto-coupler device (401) having input terminals connected to the first common polarization terminal (502) through a first resistance (R9) and to a ground reference potential (GND), respectively, said second opto-coupler being configured to provide a feedback signal (FBK) indicative of faults in the circuit block (106) on a respective output terminal.

9. Electronic power apparatus (100) according to claim 8, wherein said circuit block (106) comprises a further Zener diode (D2) having the anode connected to the ground reference potential (GND) and the cathode connected to the first polarization terminal (502) operating as a protective element against overvoltages.

10. Electronic power apparatus (100) according to any one of the previous claims, wherein said circuits block (106) ensures a fault tolerance equal to or greater than 1 when there is a stop command of the motor (M).

11. Electronic power apparatus (100) according to any one of the previous claims, wherein said digital control signal (SE) takes up a high level (1 logic) to activate the buffer device (301) and a low level (0 logic) to deactivate it.

12. Electronic power apparatus (100) according to claim 1, wherein said circuit block (106) is insensitive to a fault that concerns one of the input resistances (Ri) or the buffer device (301).

**Patentansprüche**

1. Elektronische Energievorrichtung (100) zum Steuern/Regeln der Bewegung eines Drei-Phasen-Wechselstrom-(AC)-Elektromotors (M), umfassend:

   - eine Einstellstufe (101), die geeignet ist, um eine Mehrzahl von digitalen pulsbreitenmodulierten PWM-Signalen (102) zu erzeugen;
   - eine Leistungsstufe (103), die geeignet ist, um dem Motor (M) elektrische Energie zuzuführen, um dessen Bewegung basierend auf den digitalen Signalen zu steuern/zu regeln;
   - eine Schaltungsblock (106), der zwischen der Einstellstufe (101) und der Leistungsstufe (103) angeordnet ist, um die digitalen PWM-Signale (102) an Eingangsstiften (A1-A6) zu empfangen;

   wobei der Schaltungsblock (106) eine elektronische Puffervorrichtung (301) aufweist, die geeignet ist, um in Antwort auf ein an den Schaltungsblock (106) angelegtes Steuersignal (SE) einen aktiven/inaktiven Zustand aufzunehmen, wobei in dem aktiven/inaktiven Zustand die Puffervorrichtung (301) mit einem elektrischen Polarisierungsanschluss (Vcc) des Schaltungsblocks (106) verbunden/davon getrennt ist, wobei die Puffervorrichtung (301) eine erste Mehrzahl von Eingangsanschlüssen aufweist, die jeweils mit einem entsprechenden Eingangsstift (A1-A6) verbunden sind, um jeweils eines der digitalen PWM-Signale (102) zu empfangen, das von der Einstellstufe (101) erzeugt wird, und konfiguriert ist, um in dem aktiven Zustand die Übertragung der digitalen Signale (102) von der Einstellstufe (101) zur Leistungsstufe (103) zu erlauben und in dem inaktiven Zustand die Übertragung der Signale (102) zu verhindern, **dadurch gekennzeichnet, dass** die Puffervorrichtung (301) vom CMOS-Typ ist und jeder Eingangsanschluss mit dem entsprechenden Eingangsstift (A1-A6) durch zumindest einen Eingangswiderstand (Ri) verbunden ist, der konfiguriert ist, um einen elektrischen Strom an dem Stift während des inaktiven Zustands zu begrenzen, wobei die Eingangswiderstände (R1-R6) des Schaltungsblocks alle basierend auf der folgenden Beziehung bemes-sen sind:

$$Ri > 6 \, ( \, (VccMax - VOmin) \, / \, IOmin),$$

wobei VccMax die maximale Stromversorgungsspannung des Schaltungsblocks (106) ist, und VOmin und IOmin die minimalen Spannungs- und Stromreferenzwerte zum Schalten an den in der Leistungsstufe (103) enthaltenen Steuerschaltungen sind.

**2.** Die elektronische Energievorrichtung (100) nach Anspruch 1, worin die erste Mehrzahl von Eingangsanschlüssen sechs Anschlüsse aufweist.

**3.** Die elektronische Energievorrichtung (100) nach Anspruch 1, worin der zumindest eine Eingangswiderstand (Ri) zum Abführen einer Leistung größer als geeignet ist:

$$(VccMax)^2/Ri,$$

worin VccMax die maximale Stromversorgungsspannung des Schaltungsblocks (106) ist und Ri der Wert des zumindest einen Eingangswiderstands ist.

**4.** Die elektronische Energievorrichtung (100) nach Anspruch 1, worin der Schaltungsblock (106) eine erste Optokopplervorrichtung (500) aufweist, die zur Aktivierung/Deaktivierung durch das Steuersignal (SE) geeignet ist, um im aktiven Zustand der Puffervorrichtung die Verbindung eines Stromversorgungsstifts (VCC') der Puffervorrichtung (301) mit dem elektrischen Polarisierungsanschluss (Vcc) zu erlauben, und diese im inaktiven Zustand der Vorrichtung zu verhindern.

**5.** Die elektronische Energievorrichtung (100) nach Anspruch 4, worin die erste Optokopplervorrichtung (500) aktiviert/deaktiviert wird, um den elektrischen Polarisierungsanschluss (Vcc) mit einem ersten gemeinsamen Polarisierungsanschluss (502) des Schaltungsblocks (106) zu verbinden/davon zu trennen, wobei der Stromversorgungsstift (VCC') der Puffervorrichtung (301) mit dem ersten gemeinsamen Anschluss (502) verbunden ist.

**6.** Die elektronische Energievorrichtung (100) nach Anspruch 5, worin der Schaltungsblock (106) Zener-Dioden (D3, D4, D5, D6, D7, D8) aufweist, die zur Verbindung einer zweiten Mehrzahl von Ausgangsstiften (Y1-Y6) der Puffervorrichtung (301) mit dem ersten gemeinsamen Polarisierungsanschluss (502) geeignet sind.

**7.** Die elektronische Energievorrichtung (100) nach Anspruch 6, worin die zweite Mehrzahl von Ausgangsstiften (Y1-Y6) der Puffervorrichtung (301) sechs Ausgangsstifte aufweist.

**8.** Die elektronische Energievorrichtung (100) nach Anspruch 5, worin der Schaltungsblock (106) eine zweite Optokopplervorrichtung (401) aufweist, dessen Eingangsanschlüsse jeweils mit dem ersten gemeinsamen Polarisierungsanschluss (502) durch einen ersten Widerstand (R3) und mit einem Massereferenzpotential (GND) verbunden sind, wobei der zweite Optokoppler konfiguriert ist, um ein Rückkopplungssignal (FBK), das Fehler in dem Schaltungsblock (106) anzeigt, an einem jeweiligen Ausgangsanschluss vorzusehen.

**9.** Die elektronische Energievorrichtung (100) nach Anspruch 8, worin der Schaltungsblock (106) eine weitere Zener-Diode (D2) aufweist, deren Anode mit dem Massereferenzpotential (GND) verbunden ist, und deren Kathode mit dem ersten Polarisierungsanschluss (502) verbunden ist, wobei sie als Schutzelement gegen Überspannungen arbeitet.

**10.** Die elektronische Energievorrichtung (100) nach einem der vorhergehenden Ansprüche, worin der Schaltungsblock (106) ein Fehlertoleranzsignal gleich oder größer als 1 sicherstellt, wenn ein Stoppbefehl des Motors (M) vorliegt.

**11.** Die elektronische Energievorrichtung (100) nach einem der vorhergehenden Ansprüche, worin das digitale Steuersignal (SE) einen hohen Pegel (logisch 1) einnimmt, um die Puffervorrichtung (301) zu aktivieren, und einen niedrigen Pegel (logisch 0), um diese zu deaktivieren.

**12.** Die elektronische Energievorrichtung (100) nach Anspruch 1, worin der Schaltungsblock (106) auf einen Fehler unempfindlich ist, der einen der Eingangswiderstände (Ri) oder die Puffervorrichtung (301) betrifft.

**Revendications**

**1.** Appareil électronique de puissance (100) pour commander le mouvement d'un moteur électrique (M) à courant alternatif (AC) triphasé, comprenant :

- un étage d'ajustement (101) approprié pour générer une pluralité de signaux numériques modulés par durée d'impulsion PWM (102) ;
- un étage de puissance (103) approprié pour transférer une puissance électrique au moteur (M) pour commander son mouvement sur la base desdits signaux numériques ;
- un bloc de circuit (106) agencé entre ledit étage d'ajustement (101) et ledit étage de puissance (103) pour recevoir lesdits signaux numériques PWM (102) au niveau de broches d'entrée (A1 à A6),

ledit bloc de circuit (106) comprenant un dispositif électronique tampon (301) approprié pour adopter un état actif/inactif en réponse à un signal de commande (SE) appliqué au bloc de circuit (106), dans ledit état actif/inactif, le dispositif tampon (301) étant connecté/déconnecté à/d'une borne de polarisation électrique (Vcc) du bloc de circuit (106), le dispositif tampon (301) comprenant une première pluralité de bornes d'entrée connectées chacune à une borne d'entrée (A1 à A6) respective pour recevoir chacune l'un desdits signaux numériques PWM (102) générés par l'étage d'ajustement (101), et étant configuré pour permettre auxdits signaux numériques (102) de transiter de l'étage d'ajustement (101) vers l'étage de puissance (103) dans ledit état actif et pour empêcher les signaux (102) de transiter dans ledit état inactif,

**caractérisé en ce que** ledit dispositif tampon (301) est du type CMOS et chaque borne d'entrée est connectée à la broche d'entrée (A1 à A6) respective par l'intermédiaire d'au moins une résistance d'entrée (Ri) configurée pour limiter un courant électrique sur ladite broche dans ledit état inactif, lesdites résistances d'entrée (R1 à R6) du bloc de circuit sont toutes dimensionnées sur la base de la relation suivante :

$$\text{Ri} > 6((\text{VccMax}-\text{VOmin})/\text{IOmin})$$

où VccMax est la tension d'alimentation maximum du bloc de circuit (106), et VOmin et IOmin sont les valeurs de référence de tension et de courant minimums pour activer les circuits de commande inclus dans l'étage de puissance (103).

2. Appareil électronique de puissance (100) selon la revendication 1, dans lequel ladite première pluralité de bornes d'entrée comprend six bornes.

3. Appareil électronique de puissance (100) selon la revendication 1, dans lequel ladite au moins une résistance d'entrée (Ri) est appropriée pour dissiper une puissance supérieure à :

$$(\text{VccMax})^2/\text{Ri},$$

où VccMax est la tension d'alimentation maximum du bloc de circuit (106) et Ri est la valeur de ladite au moins une résistance d'entrée.

4. Appareil électronique de puissance (100) selon la revendication 1, dans lequel ledit bloc de circuit (106) comprend un premier dispositif d'opto-couplage (500) approprié pour être activé/désactivé par ledit signal de commande (SE) pour permettre la connexion d'une broche d'alimentation (VCC') du dispositif tampon (301) à ladite borne de polarisation électrique (Vcc) dans l'état actif du dispositif tampon et pour l'empêcher dans l'état inactif du dispositif.

5. Appareil électronique de puissance (100) selon la revendication 4, dans lequel ledit premier dispositif d'opto-couplage (500) est activé/désactivé pour connecter/déconnecter la borne de polarisation électrique (Vcc) à/d'une première borne de polarisation commune (502) du bloc de circuit (106), ladite broche d'alimentation (VCC') du dispositif tampon (301) étant connectée à ladite première borne commune (502).

6. Appareil électronique de puissance (100) selon la revendication 5, dans lequel ledit bloc de circuit (106) comprend des diodes Zener (D3, D4, D5, D6, D7, D8) appropriées pour connecter une deuxième pluralité de broches de sortie (Y1 à Y6) du dispositif tampon (301) à ladite première borne de polarisation commune (502).

7. Appareil électronique de puissance (100) selon la revendication 6, dans lequel ladite deuxième pluralité de broches de sortie (Y1 à Y6) du dispositif tampon (301) comprend six broches de sortie.

8. Appareil électronique de puissance (100) selon la revendication 5, dans lequel ledit bloc de circuit (106) comprend un deuxième dispositif d'opto-couplage (401) ayant des bornes d'entrée connectées à la première borne de polarisation commune (502) par l'intermédiaire d'une première résistance (R9) et à un potentiel de référence de masse (GND), respectivement, ledit deuxième opto-coupleur étant configuré pour fournir un signal de rétroaction (FBK) indicatif de défauts dans le bloc de circuit (106) sur une borne de sortie respective.

9. Appareil électronique de puissance (100) selon la revendication 8, dans lequel ledit bloc de circuit (106) comprend une diode Zener supplémentaire (D2) dont l'anode est connectée au potentiel de référence de masse (GND) et dont la cathode est connectée à la première borne de polarisation (502) fonctionnant en tant qu'élément de protection contre des surtensions.

10. Appareil électronique de puissance (100) selon l'une quelconque des revendications précédentes, dans lequel ledit bloc de circuit (106) garantit une tolérance aux défauts supérieure ou égale à 1 lorsqu'il y a une commande d'arrêt du moteur (M).

11. Appareil électronique de puissance (100) selon l'une quelconque des revendications précédentes, dans lequel ledit signal de commande numérique (SE) prend un niveau haut (1 logique) pour activer le dispositif tampon (301) et un niveau bas (0 logique) pour le désactiver.

12. Appareil électronique de puissance (100) selon la revendication 1, dans lequel ledit bloc de circuit (106) est insensible à un défaut qui concerne l'une des résistances d'entrée (Ri) ou le dispositif tampon (301).

**FIG. 1**

100

**FIG. 2**

FIG. 3

FIG.4
(Prior Art)

**EP 2 405 568 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1542330 A2
- US 2004164694 A1